# EUROPÄISCHE PATENTSCHRIFT

(11) **EP 2 236 232 B1**
(45) Veröffentlichungstag und Bekanntmachung des Hinweises auf die Patenterteilung: **25.04.2018**
(21) Anmeldenummer: 10003111.1
(22) Anmeldetag: 24.03.2010
(51) Int. Cl.: B23D 47/02, B23D 47/04, B27B 5/065, B27B 31/00

(54) **Sägemaschine**
Sawing machine
Scie mécanique

(30) Priorität: 02.04.2009 AT 5222009
(43) Veröffentlichungstag der Anmeldung: 06.10.2010
(73) Patentinhaber: Schelling Anlagenbau GmbH, 6858 Schwarzach (AT)
(72) Erfinder: Pöschl, Wolfgang, 6844 Altach (AT); Moosbrugger, Klaus, 6866 Andelsbuch (AT)
(74) Vertreter: Hofmann, Ralf U.

(56) Entgegenhaltungen:
- DE-A1- 4 233 082
- DE-C1- 3 217 866
- DE-U1- 8 915 864
- US-A- 2 609 014
- US-A1- 2006 054 452

## Beschreibung

Die vorliegende Erfindung betrifft eine Sägemaschine zum Zersägen zumindest eines Werkstücks, insbesondere einer Platte oder eines Plattenstapels, mit einer, entlang einer, insbesondere geraden, Schnittlinie verfahrbaren Sägeeinrichtung zum Durchtrennen des auf oder an einer Maschinentischoberfläche eines Maschinentisches der Sägemaschine auf- oder anliegenden Werkstücks, wobei im oder am Maschinentisch eine Abfolge von Stützkörpern angeordnet ist, deren Stützoberflächen zum Abstützen des Werkstücks von zumindest einem Stützkörperantrieb aus einer zurückgezogenen Position in der Maschinentischoberfläche oder auf einer ersten Seite, vorzugsweise in Betriebsstellung der Sägemaschine unterhalb, der Maschinentischoberfläche in eine vorgeschobene Position auf einer zweiten Seite, vorzugsweise in Betriebsstellung der Sägemaschine oberhalb, der Maschinentischoberfläche verfahrbar ist. Eine solche Sägemaschine ist in DE3217866 offenbart. Solche Sägemaschinen sind beim Stand der Technik bekannt und werden häufig auch als Plattenaufteilanlagen bezeichnet. Die zu zersägenden Werkstücke, in der Regel Platten oder Plattenstapel, können bei kleineren Sägemaschinen dieser Art von Hand auf dem Maschinentisch bzw. dessen Maschinentischoberfläche ausgerichtet werden. Bei größeren, insbesondere weitgehend automatisierten Ausgestaltungsformen von solchen Sägemaschinen sind meist Greif- und Vorschubeinrichtungen vorgesehen, um die Werkstücke auf der Maschinentischoberfläche auszurichten. Beim Schnitt- bzw. Sägevorgang selbst bleiben die Werkstücke in ihrer vorher ausgerichteten Position. Beim Sägevorgang wird die Sägeeinrichtung entlang der Schnittlinie verfahren. Sie durchtrennt dabei das bzw. die Werkstücke. Damit die Werkstücke während des Sägevorgangs ruhig auf der Maschinentischoberfläche liegen bleiben und nicht ihre Position während des Sägens ändern, ist es auch bekannt, sogenannte Druckbalken einzusetzen, die das Werkstück bzw. die Werkstücke auf die Maschinentischoberfläche aufdrücken.

Eine Sägemaschine ist z.B. in der AT 404 810 B beschrieben.

Aus der DE 89 15 864 U1 ist eine Transporteinrichtung zur Bewegung von zu sägenden Platten in senkrecht zueinander stehende Bewegungsrichtungen bekannt. Hierzu sind miteinander mechanisch gekoppelte und in der Höhe verstellbare Stützrollen vorgesehen, welche gemeinsam über bzw. unter eine Werkcstückauflageebene bewegbar sind.

In der DE 32 17 866 C1 sind Aufteilsägen für Platten gezeigt, bei welchen die über dem Werkstück angeordnete Säge von einem beweglichen Portal bewegt wird. Die den Maschinentisch bildenden Stützkörper können gruppenweise in eine zurückgezogene Position unterhalb der Auflageebene des Werkstücks zurückweichen, um eine Beschädigung des Maschinentischs durch das Sägeblatt beim Schneidvorgang zu verhindern.

Beim Aufteilen von Platten, speziell von Platten aus Metall wie z.B. Aluminium- oder Buntmetall oder Stahl, kommt es häufig vor, dass die Platten in sich verzogen sind und dadurch keine durchgehende Auflage auf der Maschinentischoberfläche des Maschinentisches möglich ist. Dies hat häufig zur Folge, dass diese Platten, hervorgerufen durch die auf sie einwirkenden Zerspanungskräfte des Sägevorgangs, in Schwingung bzw. Vibration versetzt werden, was sich wiederum negativ auf das Zerschneiden bzw. Zerspanen auswirkt. Hierunter kann sowohl die Schnittqualität als auch die Standzeit des Werkzeuges leiden. Im Extremfall können sich diese Schwingungen bis zur Resonanz aufschaukeln, wodurch es sogar zum Bruch des Sägewerkzeuges kommen kann.

Aufgabe der Erfindung ist es, eine gattungsgemäße Sägemaschine dahingehend zu verbessern, dass auf ihr auch problemlos verzogene bzw. unebene Werkstücke, insbesondere Platten oder Plattenstapel, zersägt werden können, ohne dass eine Beeinträchtigung durch Schwingungen und Vibrationen beim Schneid- bzw. Sägevorgang eintritt.

Die Aufgabe wird gelöst, indem die Stützoberflächen zum Abstützen des Werkstücks jeweils unabhängig voneinander von zumindest einem Stützkörperantrieb aus einer zurückgezogenen Position in der Maschinentischoberfläche oder auf der ersten Seite, vorzugsweise in Betriebsstellung der Sägemaschine unterhalb, der Maschinentischoberfläche in eine vorgeschobene Position auf der zweiten Seite, vorzugsweise in Betriebsstellung der Sägemaschine oberhalb, der Maschinentischoberfläche verfahrbar sind.

Eine Grundidee der Erfindung liegt somit darin, Stützkörper vorzusehen, welche aus dem Maschinentisch ausgefahren werden können und mit ihrer Stützoberfläche das Werkstück in den Bereichen abstützen, in denen es nicht auf der Maschinentischoberfläche abgestützt ist. Hierdurch liegt das Werkstück beim Sägevorgang satt auf, zum Teil auf der Maschinentischoberfläche und zum Teil auf der oder den Stützoberflächen der Stützkörper. Im Ergebnis werden die eingangs genannten Vibrationen und Schwingungen verhindert oder zumindest stark vermindert. In der zurückgezogenen Position des Stützkörpers liegt dessen Stützoberfläche entweder an bzw. in der Maschinentischoberfläche oder auf einer ersten Seite der Maschinentischoberfläche, auf der die Werkstücke nicht angeordnet sind. Häufig ist die Maschinentischoberfläche als horizontale Ebene ausgebildet. In diesen Fällen liegt die erste Seite unterhalb der Maschinentischoberfläche. Solange sich der Stützkörper bzw. dessen Stützoberfläche in der zurückgezogenen Position befindet, können das oder die Werkstücke auf oder an der Maschinentischoberfläche verschoben werden, ohne mit den Stützkörpern bzw. ihren Stützoberflächen zu kollidieren. Die Stützkörperoberflächen werden daher beim Ausrichten des oder der Werkstücke auf dem Maschinentisch in der Regel in der zurückgezogenen Position gehalten. Günstigerweise wird, erst wenn das zu zersägende Werkstück in der gewünschten Position auf oder an der Maschinentischoberfläche anliegt, die Stützoberfläche so weit wie benötigt in ihre vorgeschobene Position verschoben. Diese vorgeschobene Position liegt auf einer zweiten Seite der Maschinentischoberfläche. Die zweite Seite der Maschinentischoberfläche ist günstigerweise die der ersten Seite bezüglich der Maschinentischoberfläche gegenüberliegende Seite auf der auch die Werkstücke zum Zersägen angeordnet werden. Ist die Maschinentischoberfläche als horizontale Ebene ausgeführt, so befindet sich diese zweite Seite in Betriebsstellung der Sägemaschine günstigerweise oberhalb der Maschinentischoberfläche.

Der Vollständigkeit halber wird darauf hingewiesen, dass, wie beim Stand der Technik an sich bekannt, die Maschinentischoberfläche nicht zwingend als eine durchgehende Ebene ausgeführt sein muss. Der Maschinentisch kann auch bei erfindungsgemäßen Sägemaschinen, wie an sich bekannt, durch verschiedene voneinander getrennte Auflagestellen eine Maschinentischoberfläche bzw. deren Ebene vorgeben.

In der Regel werden bei gattungsgemäßen, wie auch bei erfindungsgemäßen Sägemaschinen relativ großflächige Werkstücke wie insbesondere Platten oder Plattenstapel zersägt. Die Stützkörper der Abfolge sind günstigerweise voneinander beabstandet und können z.B. entlang einer Parallelen zur Schnittlinie in oder am Maschinentisch angeordnet sein.

Bei all diesen Ausgestaltungsformen ist es grundsätzlich günstig, wenn die erfindungsgemäße Sägemaschine mit einem an sich bekannten Druckbalken zum Andrücken des oder der Werkstücke auf die Maschinentischoberfläche ausgestattet ist. Der Druckbalken ist dabei bevorzugt heb- und senkbar ausgebildet und über der Maschinentischoberfläche bzw. allgemein gesprochen auf der zweiten Seite der Maschinentischoberfläche angeordnet.

Der Vollständigkeit halber sei darauf hingewiesen, dass bevorzugte Ausgestaltungsformen der Sägemaschine, wie an sich bekannt, eine unter dem Maschinentisch entlang der Schnittlinie verfahrbare Sägeeinrichtung aufweisen. Solche Sägeeinrichtungen haben dann günstigerweise ein heb- und senkbares Sägeblatt. Sie können einen Sägewagen aufweisen, der motorgetrieben entlang der Schnittlinie verfahrbar ist und das Sägeblatt trägt. Das Sägeaggregat zum Antrieb des Sägeblattes ist dann günstigerweise ebenfalls am Sägewagen, also unterhalb des Maschinentisches bzw. der Maschinentischoberfläche angeordnet. Beim Sägeblatt kann es sich z.B. um ein Kreissägeblatt handeln. Auch an sich bekannt Vorritzsägeblätter können an der Sägeeinrichtung vorhanden sein.

Damit die Stützkörper unterschiedlich gewellte Platten oder sonstige Werkstücke optimal unterstützen können, ist es günstig, dass es vorzugsweise bei jedem einzelnen Stützkörper möglich ist, die Stützoberfläche unterschiedlich weit in eine vorgeschobene Position auf der zweiten Seite der Maschinentischoberfläche zu verfahren. Bei einer Abfolge von Stützkörpern ist es darüber hinaus auch günstig, wenn bei verschiedenen Stützkörpern die Stützoberflächen unterschiedlich weit in verschiedene vorgeschobene Positionen auf der zweiten Seite der Maschinentischoberfläche verfahrbar sind. Weiters ist bevorzugt vorgesehen, dass die Stützkörper gleichzeitig aber auch zu verschiedenen Zeitpunkten in die vorgeschobene Position verfahren werden können. Besonders einfach ist das realisierbar, wenn, wie in bevorzugten Ausgestaltungsformen vorgesehen, jedem Stützkörper jeweils ein separater Stützkörperantrieb zum Verfahren in die genannte vorgeschobene Position zugeordnet ist.

In einer Draufsicht sind die Stützkörper und/oder die Stützoberfläche, vorzugsweise beiderseits, neben der Schnittlinie angeordnet. Günstig ist, wenn die Stützkörper bzw. deren Stützoberflächen relativ nah an der Schnittlinie liegen. Bevorzugte Ausgestaltungsformen sehen in diesem Sinne vor, dass der oder die Stützkörper und/oder der oder die Stützoberfläche(n), in der Draufsicht auf die Maschinentischoberfläche gesehen, einen Abstand von maximal 100mm, vorzugsweise maximal 50mm, von der Schnittlinie aufweist (aufweisen).

Der Stützkörperantrieb zum Ausfahren der Stützoberfläche in die genannte vorgeschobene Position, aber bevorzugt auch zum Zurückfahren der Stützoberfläche in die zurückgezogene Position, kann grundsätzlich sehr unterschiedlich ausgestaltet sein. Geeignete Linearantriebe sind in elektrischer, hydraulischer, pneumatischer und sonstiger Form beim Stand der Technik an sich bekannt. Bedacht werden muss dabei allerdings, dass der Stützkörper bzw. Stützbolzen einerseits mit einer relativ geringen Kraft von der zurückgezogenen in die vorgeschobene Position verfahren werden soll, damit der Stützkörper das abzustützende Werkstück nicht versehentlich anhebt. Andererseits kann in der vorgeschobenen Position aber doch, insbesondere bei der Verwendung von Druckbalken, eine erhebliche Auflast auf den Stützkörper einwirken. Es muss in diesem Sinne also verhindert werden, dass der Stützkörper durch die Auflast ungewollt wieder aus der vorgeschobenen Position zurückgeschoben wird. In diesem Sinne hat es sich als günstig herausgestellt, wenn zumindest einer der, vorzugsweise jeder, Stützkörperantrieb einen Vorschubkörper mit einem Keil aufweist und/oder der jeweils zugeordnete Stützkörper einen Keil aufweist, wobei durch Bewegen, vorzugsweise lineares Verschieben, des Vorschubkörpers mittels des Stützkörperantriebs der Stützkörper vom Vorschubkörper mittels des Keiles in die vorgeschobene Position auf der zweiten Seite der Maschinentischoberfläche verfahrbar ist. Bevorzugte Ausgestaltungsformen sehen dabei vor, dass zumindest einer der, vorzugsweise jeder, Stützkörper und der zugeordnete Vorschubkörper Keilflächen aufweisen und mit ihren Keilflächen aneinander anliegen. Durch die Ausführung mit zumindest einem Keil, vorzugsweise aber auch zwei Keilen, wirkt beim Ausfahren des Stützkörpers in Richtung der vorgeschobenen Position eine relativ geringe Kraft, sodass das zu zerschneidende Werkstück nicht aus Versehen angehoben wird. In entgegengesetzter Richtung, also in Richtung von der vorgeschobenen Position in die zurückgezogene Position, stellt sich durch die Keile jedoch eine Selbsthemmung ein, was eine besonders stabile Abstützung des Stützkörpers ergibt. In diesem Sinne ist es besonders günstig, wenn der Vorschubkörper vom Stützkörperantrieb in einer Vorschubrichtung linear verschiebbar ist und ein Winkel zwischen der Keilfläche des Keiles bzw. den Keilflächen der Keile und der Vorschubrichtung zwischen 5° und 30°, vorzugsweise zwischen 10° und 20°, beträgt.

Nun ist es grundsätzlich denkbar, dass der Stützkörperantrieb nur dazu verwendet wird, den Stützkörper von der zurückgezogenen Position in die vorgeschobene Position auszufahren und der Rückhub manuell, schwerkraftbetätigt oder durch einen anderen Antrieb vorgenommen wird. Bevorzugte Ausgestaltungsformen sehen aber vor, dass der oder die Stützkörper von den jeweils zugeordneten Stützkörperantrieben sowohl bezüglich der Bewegungsrichtung der Stützoberfläche des Stützkörpers aus der zurückgezogenen Position in die vorgeschobene Position als auch bezüglich der dazu entgegengesetzten Bewegungsrichtung verschoben werden. In anderen Worten ist bevorzugt vorgesehen, dass der Stützkörperantrieb sowohl den Ausfahrhub als auch den Rückhub aktiv durchführt. Dies kann z.B. erreicht werden, wenn zumindest einer der, vorzugsweise jeder, Stützkörper und der zugeordnete Vorschubkörper bezüglich der beiden oben genannter Bewegungsrichtungen zwangsgekoppelt sind. Eine solche Zwangskopplung kann z.B. erreicht werden, wenn der Stützkörper und der zugeordnete Vorschubkörper des Stützköperantriebs mittels einer, vorzugsweise im Querschnitt T-förmig oder Schwalbenschwanz-förmigen Nut-und Feder- Verbindung in den Keilflächen von Vorschubkörper und Stützkörper zwangsgekoppelt sind.

Durch die Verwendung der Keile bzw. Keilflächen ist es möglich, dass der Vorschubkörper vom Stützkörperantrieb in einer Vorschubrichtung, vorzugsweise linear, verschiebbar ist, welche schräg oder orthogonal zu einer Bewegungsrichtung des Stützkörpers bzw. der Stützoberfläche ist, in welcher der Stützkörper bzw. die Stützoberfläche von der Position in bzw. auf der ersten Seite der Maschinentischoberfläche in eine Position auf der zweiten Seite der Maschinentischoberfläche verschoben wird. Eine Platz sparende Variante sieht vor, dass der Stützkörperantrieb innerhalb des Maschinentisches und/oder auf der ersten Seite, vorzugsweise in Betriebsstellung der Sägemaschine unterhalb, der Maschinentischoberfläche angeordnet ist. Der Vollständigkeit halber wird darauf hingewiesen, dass unter "schräg" all diejenigen Winkel, die weder einer orthogonalen noch einer parallelen Ausrichtung entsprechen, zu verstehen sind.

Weitere Merkmale und Einzelheiten bevorzugter Ausgestaltungsformen der Erfindung werden anhand der beiliegenden Figuren erläutert. Es zeigen:
- Fig. 1: eine Frontalansicht auf eine schematisch dargestellte erfindungsgemäße Sägeeinrichtung;
- Fig. 2: einen Querschnitt in orthogonaler Richtung durch die Sägemaschine gemäß Fig. 1;
- Fig. 3: eine vergrößerte Darstellung des Maschinentisches aus Fig. 2;
- Fig. 4: eine Draufsicht auf den Maschinentisch, wobei der Druckbalken der Übersichtlichkeit halber nicht eingezeichnet ist;
- Fig. 5: das Detail A aus Fig. 4 und
- Fig. 6: einen schematisierten Schnitt durch eine Anordnung aus Stützkörper und Vorschubkörper;

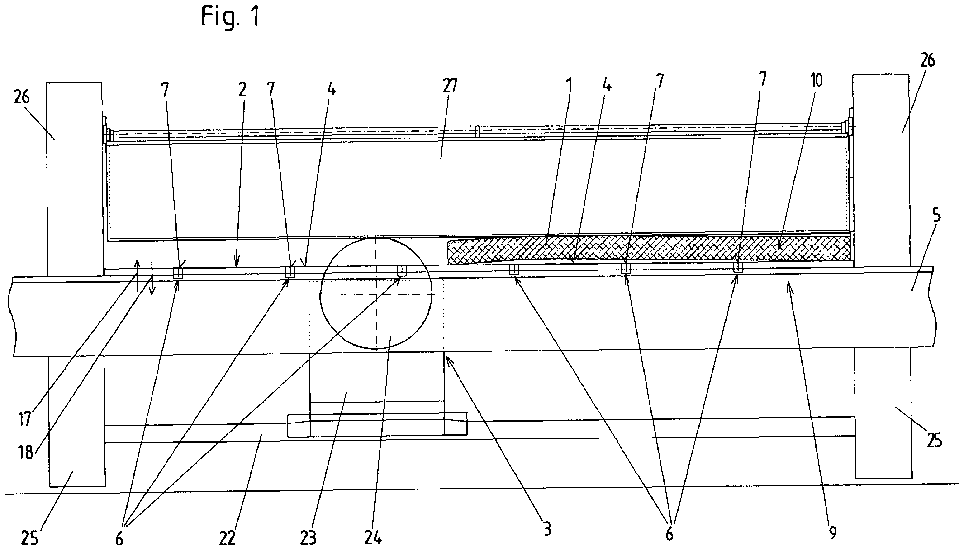

Die in Fig. 1 gezeigte Sägemaschine weist einen auf Maschinentischfüßen 25 gelagerten Maschinentisch 5 auf. Dieser besitzt eine Maschinentischoberfläche 4, auf die die zu zersägenden Werkstücke 1 aufgelegt werden. Auf der zweiten Seite 10 der Maschinentischoberfläche, im gezeigten Ausführungsbeispiel also oberhalb der Maschinentischoberfläche 4 befindet sich der entlang der Ständer 26 auf und ab fahrbare Druckbalken 27. Dieser dient, wie an sich bekannt, dazu, das Werkstück 1 während des Sägevorgangs an die Maschinentischoberfläche 4 anzudrücken, damit dieses während des Sägens fest liegt.

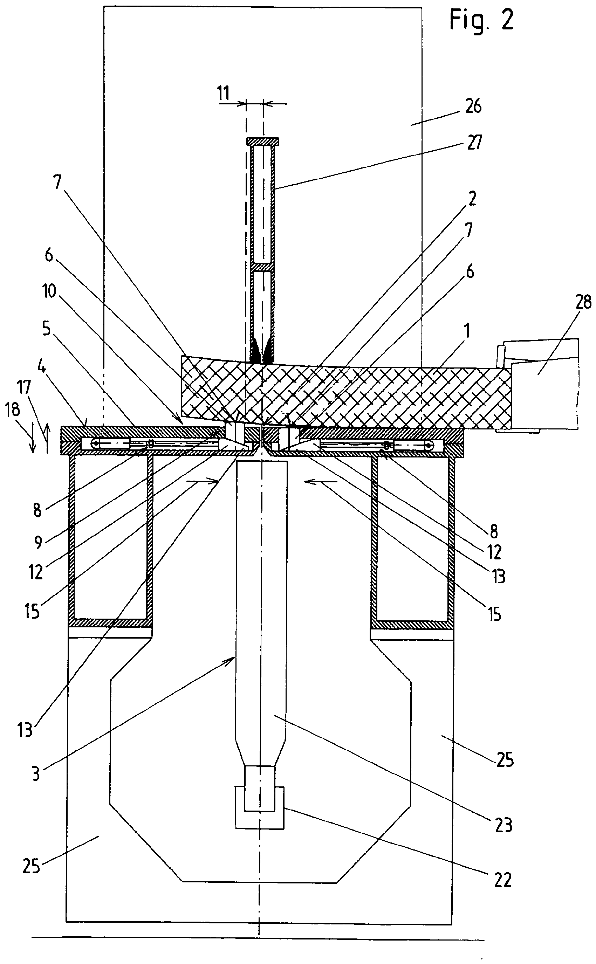

Die gezeigte Sägemaschine ist als sogenannte Unterflursäge ausgebildet. Auch dies ist natürlich nur ein Beispiel. In der konkret dargestellten Form weist die Sägeeinrichtung 3 einen Sägewagen 23 auf, welcher entlang der parallel zur Schnittlinie 2 verlaufenden Führungsschiene 22 verfahrbar ist. Der Sägewagen 23 trägt das nicht extra dargestellte Sägeaggregat, welches das hier als Kreissägeblatt ausgeführte Sägeblatt 24 antreibt. Der Sägewagen ist über einen ebenfalls nicht dargestellten, aber beim Stand der Technik bekannten, Antrieb entlang der Führungsschiene 22 verfahrbar. Die Führungsschiene 22 und/oder der Druckbalken 27 können auch so ausgeführt sein, dass über sie ein Absaugen von Sägespänen möglich ist. Wie ebenfalls an sich bekannt, ist die Schnittlinie 2, wie insbesondere in Fig. 2 zu sehen, als Spalt zwischen zwei Hälften des Maschinentisches 5 ausgebildet. Das Sägeblatt 24 kann durch diesen Spalt entlang der Schnittlinie 2 geführt werden. Dabei ist es günstig, wenn das Sägeblatt 24 zum Sägen in eine angehobene Stellung gebracht werden kann und in einer abgesenkten Stellung, vorzugsweise vollständig unterhalb der Maschinentischoberfläche 4, im Sägewagen 23 untergebracht ist. All dies ist nur eine beispielhafte Ausführung. Die bisher beschriebenen, an sich bekannten Merkmale einer Sägemaschine können auch anders ausgebildet sein.

Wie in Fig. 1 auch zu sehen ist, kann es, insbesondere wenn Platten aus Metall zersägt werden sollen, dazu kommen, dass in sich verzogene bzw. unebene Platten zersägt werden müssen. Diese können nicht vollflächig auf die ebene Maschinentischoberfläche 4 aufgelegt werden. Beim Zersägen ergibt sich dadurch beim Stand der Technik das Problem, dass es zu den eingangs bereits geschilderten Schwingungen und Vibrationen beim Sägevorgang kommen kann, welche insbesondere im Resonanzfall sogar dazu führen können, dass die Sägeeinrichtung 3 oder andere Bauteile der Sägemaschine beeinträchtigt oder zerstört werden.

Um solche Vibrationen zu vermeiden, ist nun vorgesehen, dass im oder am Maschinentisch 5 mehrere Stützkörper 6 angeordnet sind. Die Stützoberflächen 7 der Stützkörper 6 können zum Abstützen des Werkstücks 1 von einem, in den nachfolgenden Figuren dargestellten Stützkörperantrieb 8, aus einer zurückgezogenen Position in eine vorgeschobene Position verfahren werden. In der vorgeschobenen Position stützen sie das Werkstück 1 in den Bereichen ab, mit denen es nicht auf der Maschinentischoberfläche 4 aufliegt. Hierdurch werden die eingangs genannten störenden Schwingungen und Vibrationen vermieden. In der zurückgezogenen Position liegen die Stützoberflächen 7 der Stützkörper 6 in oder auf einer ersten Seite 9 der Maschinentischoberfläche 4. Im gezeigten Ausführungsbeispiel, mit horizontal verlaufender Maschinentischoberfläche 4 befindet sich diese ersten Seite 9 unterhalb der Maschinentischoberfläche 4. Von dort aus können die Stützoberflächen 7 bzw. die Stützkörper 6 von den jeweiligen Stützkörperantrieben 8 in eine vorgeschobene Position auf einer zweiten Seite 10 der Maschinentischoberfläche 4 verfahren werden. Im gezeigten Ausführungsbeispiel ist die zweite Seite 10 der Bereich oberhalb der Maschinentischoberfläche 4. Um die im gezeigten Ausführungsbeispiel entlang der Sägelinie bzw. Schnittlinie 2 angeordneten Stützkörper 6 in ihrer Lage bzw. ihrem Hub individuell an die Ausformung des Werkstückes 1 anpassen zu können, ist jeder Stützkörper 6 bzw. seine Stützoberfläche 7 individuell ein- und ausfahrbar. Der dabei erzielte Hub kann individuell an die lokalen Erfordernisse angepasst werden. Hierzu ist es günstig, wenn für jeden Stützkörper 6 bzw. jede Stützoberfläche 7 ein separater und separat ansteuerbarer Stützkörperantrieb 8 vorgesehen ist.

Die Pfeile 17 und 18 zeigen die Bewegungsrichtungen der Stützkörper 6 beim Ein- und Ausfahren. Eine Bewegung in Richtung 17 erfolgt von der zurückgezogenen Position des jeweiligen Stützkörpers 6 in die vorgeschobene Position, in der er mit seiner Stützkörperoberfläche 7 am Werkstück 1 anliegen kann. Dieser Hub erfolgt jeweils nachdem das Werkstück auf der Maschinentischoberfläche zum Zersägen positioniert worden ist. Der jeweilige Hub wird während des Sägevorgangs beibehalten. Nach Abschluss des Sägevorgangs werden die Stützkörper 6 in Bewegungsrichtung 18 von der vorgeschobenen Position wieder in die zurückgezogene Position zurückgefahren. Auch dies erfolgt vorzugsweise mittels der Stützkörperantriebe 8. Es ist aber auch denkbar, dass der Rückhub in Richtung 18 allein durch die Schwerkraft, nach Loslassen der Stützkörper, oder von Hand oder durch andere Aktuatoren vorgenommen wird.

Fig. 2 zeigt nun eine Schnittdarstellung entlang einer normal auf der Zeichenebene gemäß Fig. 1 stehenden Schnittebene. Hier ist zunächst schematisch ein Greifer 28 dargestellt, welcher, wie an sich bekannt, dazu vorgesehen ist, die Werkstücke 1 auf der Maschinentischoberfläche 4 zu bewegen bzw. zu positionieren. Die dazu verwendeten Vorschubvorrichtungen sind an sich bekannt und müssen nicht weiter geschildert werden.

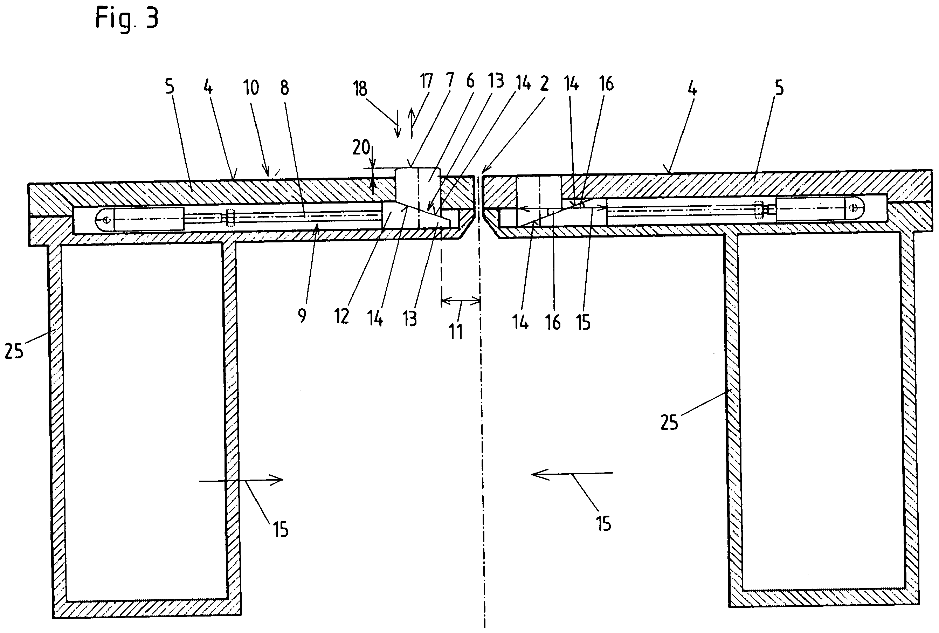

In der Schnittdarstellung besonders gut zu erkennen ist, dass bei diesem Ausführungsbeispiel die Stützkörperantriebe 8 innerhalb des Maschinentisches 1 angeordnet sind. Bevorzugte Ausgestaltungsformen sehen vor, dass eine in und/oder entgegen der Vorschubrichtung 15 erfolgende Bewegung des jeweiligen Vorschubkörpers 12 über die Keile 13 in eine entsprechende Bewegung in Richtung 17 oder 18 des zugeordneten Stützkörpers 6 umgesetzt wird. Die Funktionsweise der Stützkörperantriebe 8 des gezeigten Ausführungsbeispiels wird im Detail anhand von Fig. 3 erläutert. Fig. 2 stellt lediglich noch einmal bildhaft dar, dass günstigerweise beiderseits der Schnittlinie 2 jeweils Stützkörper 6 angeordnet sind und dass diese unterschiedlich weit in eine vorgeschobene Position verschoben werden können, um sich der Form des Werkstücks 1 möglichst optimal anzupassen.

Fig. 3 zeigt nun den Bereich des Maschinentisches 5 wie in Fig. 2, jedoch vergrößert, wobei die anderen Bauteile und auch das Werkstück 1 in der Darstellung weggelassen sind. Jeder Stützkörperantrieb 8 des gezeigten Ausführungsbeispiels weist zunächst einen Vorschubkörper 12 auf. Dieser ist entlang einer entsprechenden Ausnehmung im Maschinentisch 5, vorzugsweise linear verschiebbar. Zum Bewegen des Vorschubkörpers kann der Stützkörperantrieb 8 beispielsweise hydraulisch, pneumatisch, elektrisch oder sonstige Linearantriebe aufweisen. Die Bewegung des Vorschubkörpers 12 in Vorschubrichtung 15 wird im gezeigten Ausführungsbeispiel über den Keil 13 des Vorschubkörpers auf ein keilförmiges Ende 13 des Stützkörpers 6 übertragen, wodurch der Stützkörper 6 und damit seine Stützoberfläche 7 in Bewegungsrichtung 17 aus der zurückgezogenen Position in die vorgeschobene Position bewegt wird. Der dabei maximal erreichbare Hub bzw. Abstand 20 zwischen Stützoberfläche 7 und Maschinentischoberfläche 4 sollte günstigerweise zumindest 5mm, vorzugsweise zumindest 10mm, betragen. Günstig ist es, wenn einerseits beim Bewegen in Richtung 17 keine allzu großen Kräfte herrschen, damit das aufliegende Werkstück 1 nicht versehentlich in Richtung 17 angehoben wird. Andererseits muss während des Sägevorgangs der Stützkörper 6, insbesondere wenn der Druckbalken 27 abgesenkt ist, aber sicher in seiner einmal eingestellten Position festgehalten werden können. Diese beiden Forderungen werden günstigerweise durch die Bewegungsübertragung mittels der Keile 13 erreicht. Bevorzugte Ausgestaltungsformen sehen dabei vor, dass der Winkel 16 zwischen der jeweiligen Keilfläche 14 des jeweiligen Keiles 13 und der Vorschubrichtung 15 zwischen 5° und 30°, vorzugsweise zwischen 10° und 20° beträgt. Im vorliegenden Ausführungsbeispiel wurde ein Winkel 16 von 16° gewählt. Dies ist aber natürlich nur ein Beispiel. Der Vollständigkeit halber sei auch darauf hingewiesen, dass natürlich nicht zwingend wie im hier gezeigten Ausführungsbeispiel sowohl der Vorschubkörper 12 als auch der Stützkörper 6 einen Keil 13 mit entsprechenden Keilflächen 14 aufweisen müssen. Es ist durchaus auch möglich, nur einen Keil an einem der beiden genannten Bauteile vorzusehen, der dann an einer abgerundeten oder anderweitig ausgeführten Stützfläche des anderen Bauteils entlang gleitet.

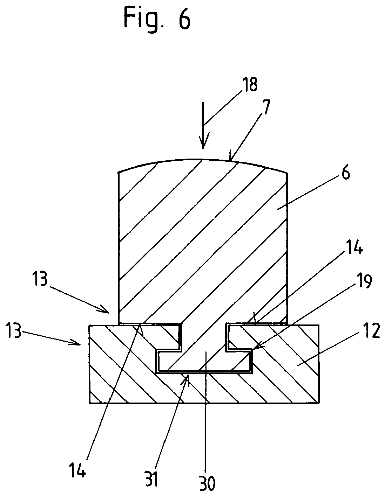

Für den Rückhub in Richtung 18 in die zurückgezogene Position der Stützoberfläche 7 würde es theoretisch ausreichen, den Vorschubkörper 12 entgegen der Richtung 15 zurückzuziehen. Bei entsprechender Lagerung würde dann der Stützkörper 6 der Schwerkraft folgend in die zurückgezogene Position zurückrutschen. Auch ein manuelles Bewegen in Richtung 18 des Stützkörpers 6 oder das Einfahren mittels anderer Maßnahmen sind denkbar. In bevorzugten Ausgestaltungsformen ist jedoch vorgesehen, dass die jeweils einander zugeordneten Stützkörper 6 und Vorschubkörper 12 bzw. Stützkörperantriebe 8 sowohl bei Bewegung in Bewegungsrichtung 17 als auch bei Bewegung in Bewegungsrichtung 18 miteinander zwangsgekoppelt sind. Hierdurch wird erreicht, dass beim Zurückziehen entgegen der Richtung 15 des Vorschubkörpers 12 auch der zugeordnete Stützkörper 6 aktiv in Richtung 18 zurückgezogen wird. Geeignete Zwangskopplungen sind beim Stand der Technik bekannt. Beispielhaft wird diesbezüglich auf Fig. 6 verwiesen, anhand der eine bevorzugte Ausgestaltungsform dieser Zwangskopplung weiter unten erläutert wird.

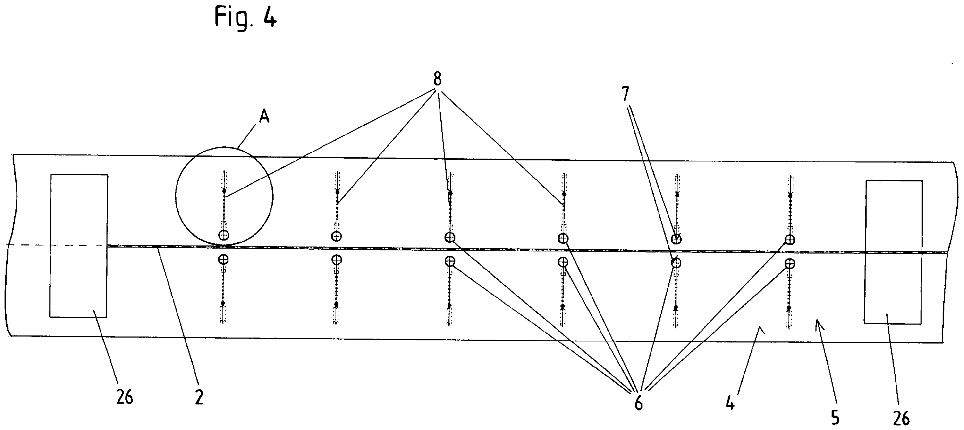

In der Draufsicht auf den Maschinentisch 5 bzw. seine Maschinentischoberfläche 4 gemäß Fig. 4 ist besonders gut zu sehen, dass in diesem Ausführungsbeispiel jeweils einander gegenüberliegend auf beiden Seiten der Schnittlinie 2 Stützkörper 6 mit entsprechenden jeweils individuell zugeordneten Stützkörperantrieben 8 vorgesehen sind. Im gezeigten Ausführungsbeispiel sind die einzelnen Stützkörper 6 entlang der Schnittlinie 2 äquidistant zueinander verteilt. Dies muss nicht zwingend so sein, es ist auch denkbar, die Stützkörper 6 mit unterschiedlichen z.B. entlang der Schnittlinie 2 zunehmenden oder abnehmenden Abständen zueinander anzuordnen. Z.B. könnte vorgesehen sein, gerechnet von einem hier nicht eingezeichneten Winkelanschlag Stützkörper 6 in Entfernungen von 100mm, 900mm, 1.150mm, 1.900mm, 2.400mm, 2.900mm und 3.900mm anzuordnen. Auch andere Anordnungen sind natürlich denkbar.

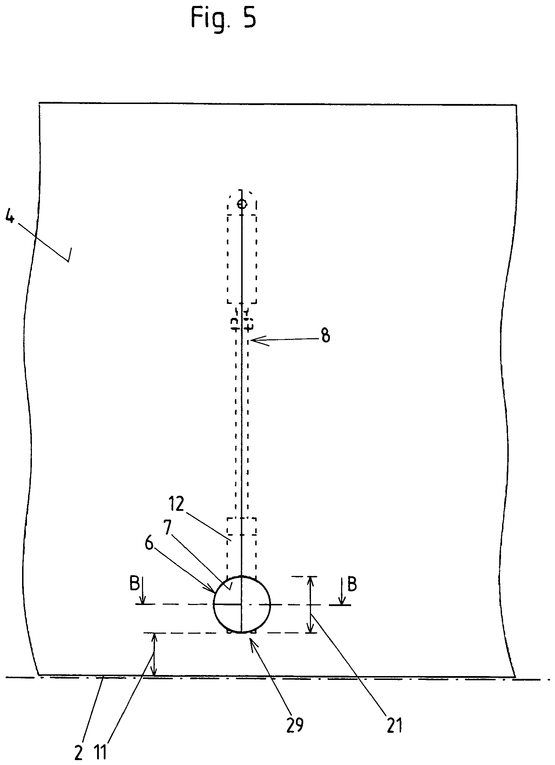

Fig. 5 zeigt das Detail A aus Fig. 4 ebenfalls in einer Draufsicht auf die Maschinentischoberfläche 4, auch hier ist der unterhalb der Maschinentischoberfläche 4 angeordnete Teil des Stützkörperantriebs 8 nur gestrichelt dargestellt.

In bevorzugten Ausgestaltungsformen ist jedenfalls vorgesehen, den Stützkörper 6 bzw. seine Stützoberfläche 7 jeweils möglichst nah an der Schnittlinie 2 anzuordnen. Dies dient dazu, eine möglichst gute Abstützung in der Nähe der Schnittlinie 2 zu erreichen, was im Sinne einer optimalen Vermeidung von Vibrationen und Schwingungen beim Sägen günstig ist. In bevorzugten Ausgestaltungsformen liegt der Abstand 11 zwischen der Schnittlinie 2 und der Stützoberfläche 7 in der gezeigten Draufsicht günstigerweise bei maximal 100mm, vorzugsweise maximal sogar nur 50mm. Der Durchmesser 21 der Stützoberfläche 7 kann z.B. zwischen 20mm und 60mm, vorzugsweise zwischen 35mm und 45mm, betragen. Im gezeigten Ausführungsbeispiel handelt es sich um einen Durchmesser 21 von 40mm.

Fig. 6 zeigt nun noch eine Ansicht aus Richtung 29 auf den, in Fig. 5 eingezeichneten, Schnitt entlang der Schnittlinie BB durch den Stützkörper 6 und den Vorschubkörper 12, um eine Möglichkeit der Zwangskopplung zwischen Vorschubkörper 12 und Stützkörper 6 zu veranschaulichen. Wie in Fig. 6 zu sehen ist, weist der Stützkörper 6 als Fortsatz seiner Keilfläche 14 eine T-förmige Feder 30 auf. Diese ist verschiebbar in einer entsprechend ausgeformten Nut 31 des Vorschubkörpers 12 gelagert. Feder 30 und Nut 31 verlaufen parallel zu den Keilflächen 14, sodass sie das Verschieben des Vorschubkörpers 12 relativ zum Stützkörper 6 in einer Richtung normal zur Zeichenebene der Fig. 6 nicht behindern, aber dafür sorgen, dass beim Zurückziehen des Vorschubkörpers 12 mittels des Stützkörperantriebs 8 entgegen der Vorschubrichtung 15 auch der Stützkörper 6 bzw. seine Stützoberfläche 7 in Richtung 18 in die zurückgezogene Position verfahren wird. Abweichend vom gezeigten Ausführungsbeispiel kann die Zwangskopplung mittels der Nut- und Federverbindung 19 natürlich auch so ausgeführt sein, dass die Feder 30 Teil des Verschubkörpers 12 und die Nut 31 Teil des Stützkörpers 6 ist. Alternativ können auch Schwalbenschwanz-förmig oder anders ausgeformte Nut- und Federverbindungen 19 vorgesehen sein, wobei dies natürlich aber nur Beispiele sind.

Eine alternative, hier nicht dargestellte Variante der Erfindung kann auch vorsehen, dass der oder die Stützkörper mittels einer Drehbewegung aus der zurückgezogenen Position in die vorgeschobene Position verfahrbar ist oder sind. Z.B. kann der Stützkörperantrieb bei diesen Varianten eine Drehbewegung erzeugen, die mittels zumindest eines Gewindes in eine Längsbewegung zum Verfahren des Stützkörpers umgesetzt wird. So ist es denkbar, den jeweiligen Stützkörper selbst in einem Gewinde im Maschinentisch drehbar zu lagern und mittels des Stützkörperantriebs den Stützkörper im Gewinde zu drehen um ihn zu verfahren. Es ist aber auch denkbar, dass der jeweilige Stützkörper selbst nicht relativ zum Maschinentisch drehbar ist, der Stützkörperantrieb aber mittels einer Gewindestange oder dergleichen am jeweiligen Stützkörper angreift um ihn zu verfahren. Bei all diesen Varianten ist es nicht nur möglich den Stützkörper mittels des Stützkörperantriebs aus der zurückgezogenen Position in die vorgeschobene Position sondern auch in die entgegengesetzte Richtung von der vorgeschobenen Position in die zurückgezogene Position zu verfahren. Insofern kann auch mit solchen Antrieben die bereits für die Keilvarianten beschriebene Zwangskoppelung in beiden Bewegungsrichtungen hergestellt sein. In diesem Sinne kann somit allgemein vorgesehen sein, dass zumindest einer der, vorzugsweise jeder, Stützkörper sowohl bezüglich der Bewegungsrichtung der Stützoberfläche des Stützkörpers aus der zurückgezogenen Position in die vorgeschobene Position als auch bezüglich der dazu entgegen gesetzten Bewegungsrichtung der Stützoberfläche des Stützkörpers zwangsgekoppelt sind.

Abschließend wird darauf hingewiesen, dass der Betrieb der Sägemaschine, wie an sich bekannt, günstigerweise automatisiert über entsprechende Steuerungen und Regelungen vorgenommen wird. Dies gilt günstigerweise auch für das Ein- und Ausfahren der Stützkörper 6. Z.B. könnte vorgesehen sein, dass in der Stützoberfläche 7 oder an anderer Stelle am Stützkörper 6 ein Kontakt- oder Drucksensor vorgesehen ist, der das automatische Ausfahren in Richtung 17 des Stützkörpers 6 beendet, sobald dieser mit seiner Stützoberfläche 7 am Werkstück 1 anstößt.

Der Vollständigkeit halber sei noch darauf hingewiesen, dass die Sägeeinrichtung 3 natürlich nicht zwingend immer unterhalb bzw. auf der ersten Seite 9 der Maschinentischoberfläche 4 angeordnet sein muss. Es ist durchaus auch denkbar, Sägemaschinen erfindungsgemäß auszugestalten, bei denen die Sägeeinrichtung 3 von oben bzw. von der zweiten Seite 10 kommend auf die Maschinentischoberfläche 4 abgesenkt wird.

### Legende

### zu den Hinweisziffern:

- 1: Werkstück
- 2: Schnittlinie
- 3: Sägeeinrichtung
- 4: Maschinentischoberfläche
- 5: Maschinentisch
- 6: Stützkörper
- 7: Stückoberfläche
- 8: Stützkörperantrieb
- 9: erste Seite
- 10: zweite Seite
- 11: Abstand
- 12: Vorschubkörper
- 13: Keil
- 14: Keilfläche
- 15: Vorschubrichtung
- 16: Winkel
- 17: Bewegungsrichtung
- 18: Bewegungsrichtung
- 19: Nut- und Federverbindung
- 20: Abstand
- 21: Durchmesser
- 22: Führungsschiene
- 23: Sägewagen
- 24: Sägeblatt
- 25: Maschinentischfuß
- 26: Ständer
- 27: Druckbalken
- 28: Greifer
- 29: Richtung
- 30: Feder
- 31: Nut

## Patentansprüche

1. Sägemaschine zum Zersägen zumindest eines Werkstücks (1), insbesondere einer Platte oder eines Plattenstapels, mit einer, entlang einer, insbesondere geraden, Schnittlinie (2) verfahrbaren Sägeeinrichtung (3) zum Durchtrennen des auf oder an einer Maschinentischoberfläche (4) eines Maschinentisches (5) der Sägemaschine auf- oder anliegenden Werkstücks (1), wobei im oder am Maschinentisch (5) eine Abfolge von Stützkörpern (6) angeordnet ist, deren Stützoberflächen (7) zum Abstützen des Werkstücks (1) von zumindest einem Stützkörperantrieb (8) aus einer zurückgezogenen Position in der Maschinentischoberfläche (4) oder auf einer ersten Seite (9), vorzugsweise in Betriebsstellung der Sägemaschine unterhalb, der Maschinentischoberfläche (4) in eine vorgeschobene Position auf einer zweiten Seite (10), vorzugsweise in Betriebsstellung der Sägemaschine oberhalb, der Maschinentischoberfläche (4) verfahrbar ist, **dadurch gekennzeichnet, dass** die Stützoberflächen (7) zum Abstützen des Werkstücks (1) jeweils unabhängig voneinander von zumindest einem Stützkörperantrieb (8) aus einer zurückgezogenen Position in der Maschinentischoberfläche (4) oder auf der ersten Seite (9), vorzugsweise in Betriebsstellung der Sägemaschine unterhalb, der Maschinentischoberfläche (4) in eine vorgeschobene Position auf der zweiten Seite (10), vorzugsweise in Betriebsstellung der Sägemaschine oberhalb, der Maschinentischoberfläche (4) verfahrbar sind.

2. Sägemaschine nach Anspruch 1, **dadurch gekennzeichnet, dass** die Stützoberflächen (7) der Stützkörper (6) unterschiedlich weit und/oder zu unterschiedlichen Zeitpunkten und/oder von jeweils separaten Stützkörperantrieben (8) in eine vorgeschobene Position auf der zweiten Seite (10) der Maschinentischoberfläche verfahrbar sind.

3. Sägemaschine nach einem der Ansprüche 1 bis 2, **dadurch gekennzeichnet, dass** der oder die Stützkörper (6) und/oder die Stützoberfläche(n) (7) in einer Draufsicht auf die Maschinentischoberfläche (4), vorzugsweise beiderseits, neben der Schnittlinie (2) angeordnet ist (sind).

4. Sägemaschine nach Anspruch 3, **dadurch gekennzeichnet, dass** die Stützkörper (6) und/oder die Stützoberflächen (7), in der Draufsicht auf die Maschinentischoberfläche (4) gesehen, einen Abstand (11) von maximal 100mm, vorzugsweise maximal 50mm, von der Schnittlinie (2) aufweisen.

5. Sägemaschine nach einem der Ansprüche 1 bis 4, **dadurch gekennzeichnet, dass** zumindest einer der Stützkörperantriebe (8), vorzugsweise jeder Stützkörperantrieb (8), einen Vorschubkörper (12) mit einem Keil (13) aufweist und/oder der jeweils zugeordnete Stützkörper (6) einen Keil (13) aufweist, wobei durch Bewegen, vorzugsweise lineares Verschieben, des Vorschubkörpers (12) mittels des Stützkörperantriebs (8) der Stützkörper (6) vom Vorschubkörper (12) mittels des Keiles (der Keile) (13) in die vorgeschobene Position auf der zweiten Seite (10) der Maschinentischoberfläche (4) verfahrbar ist.

6. Sägemaschine nach Anspruch 5, **dadurch gekennzeichnet, dass** zumindest einer der, vorzugsweise jeder, Stützkörper (6) und der zugeordnete Vorschubkörper (12) Keilflächen (14) aufweisen und mit ihren Keilflächen (14) aneinander anliegen.

7. Sägemaschine nach Anspruch 5 oder 6, **dadurch gekennzeichnet, dass** der Vorschubkörper (12) vom Stützkörperantrieb (8) in einer Vorschubrichtung (15) linear verschiebbar ist und ein Winkel (16) zwischen der Keilfläche (14) des Keiles (13) und der Vorschubrichtung (15) zwischen 5° und 30°, vorzugsweise zwischen 10° und 20°, beträgt.

8. Sägemaschine nach einem der Ansprüche 5 bis 7, **dadurch gekennzeichnet, dass** zumindest einer der, vorzugsweise jeder, Stützkörper (6) und der zugeordnete Vorschubkörper (12) sowohl bezüglich der Bewegungsrichtung (17) der Stützoberfläche (7) des Stützkörpers (6) aus der zurückgezogenen Position in die vorgeschobene Position als auch bezüglich der dazu entgegen gesetzten Bewegungsrichtung (18) der Stützoberfläche (7) des Stützkörpers (6) zwangsgekoppelt sind.

9. Sägemaschine nach Anspruch 8, **dadurch gekennzeichnet, dass** der, vorzugsweise jeder, Stützkörper (6) und der zugeordnete Vorschubkörper (12) mittels einer, vorzugsweise im Querschnitt T-förmigen oder schwalbenschwanzförmigen, Nut- und Federverbindung (19) in den Keilflächen (14) von Vorschubkörper (12) und Stützkörper (6) zwangsgekoppelt sind.

10. Sägemaschine nach einem der Ansprüche 5 bis 9, **dadurch gekennzeichnet, dass** der Vorschubkörper (12) vom Stützkörperantrieb (8) in einer Vorschubrichtung (15), vorzugsweise linear, verschiebbar ist, welche schräg oder orthogonal zu zumindest einer der Bewegungsrichtungen (17, 18) des Stützkörpers (6) bzw. der Stützoberfläche (7) von der zurückgezogenen Position in bzw. auf der ersten Seite (9) der Maschinentischoberfläche (4) in die vorgeschobene Position auf der zweiten Seite (10) der Maschinentischoberfläche (4) ist.

11. Sägemaschine nach einem der Ansprüche 1 bis 10, **dadurch gekennzeichnet, dass** der Stützkörperantrieb (8) innerhalb des Maschinentisches (1) und/oder auf der ersten Seite (9), vorzugsweise in Betriebsstellung der Sägemaschine unterhalb, der Maschinentischoberfläche (4) angeordnet ist.

12. Sägemaschine nach einem der Ansprüche 1 bis 11, **dadurch gekennzeichnet, dass** zumindest einer der, vorzugsweise jeder, Stützkörper (6) mit seiner Stützoberflächen (7) in zumindest einer der, vorzugsweise jeder, Position auf der zweiten Seite (10) der Maschinentischoberfläche (4), vorzugsweise vom zugeordneten Stützkörperantrieb (8), festhaltbar bzw. abstützbar ist.

13. Sägemaschine nach einem der Ansprüche 1 bis 12, **dadurch gekennzeichnet, dass** in der vorgeschobenen Position ein Abstand (20) zwischen der Maschinentischoberfläche (4) und der Stützoberfläche (7) zumindest eines der Stützkörper (6), vorzugsweise jedes Stützkörpers (6), von zumindest 5mm, vorzugsweise von zumindest 10mm, einstellbar ist.

14. Sägemaschine nach einem der Ansprüche 1 bis 13, **dadurch gekennzeichnet, dass** die Stützoberfläche (7) zumindest eines der Stützkörper (6), vorzugsweise jedes Stützkörpers (6), einen Durchmesser (21) zwischen 20mm und 60mm, vorzugsweise zwischen 35mm und 45mm, aufweist.

## Claims

1. A sawing machine for cutting up at least one workpiece (1), in particular a panel or a stack of panels, with a sawing means (3), which can be moved along an, in particular straight, cutting line (2), for cutting through the workpiece (1) which lies on or against a machine table surface (4) of a machine table (5) of the sawing machine, wherein a sequence of supporting members (6) is arranged in or on the machine table (5), the supporting surfaces (7) of which members for supporting the workpiece (1) can be moved by at least one supporting-member drive (8) out of a retracted position in the machine table surface (4), or on a first side (9) of, preferably in the operating position of the sawing machine below, the machine table surface (4) into an advanced position on a second side (10) of, preferably in the operating position of the sawing machine above, the machine table surface (4), **characterised in that** the supporting surfaces (7) for supporting the workpiece (1) can be moved in each case independently of each other by at least one supporting-member drive (8) out of a retracted position in the machine table surface (4) or on the first side (9) of, preferably in the operating position of the sawing machine below, the machine table surface (4) into an advanced position on the second side (10) of, preferably in the operating position of the sawing machine above, the machine table surface (4).

2. A sawing machine according to Claim 1, **characterised in that** the supporting surfaces (7) of the supporting members (6) can be moved to different extents and/or at different times and/or by in each case separate supporting-member drives (8) into an advanced position on the second side (10) of the machine table surface.

3. A sawing machine according to one of Claims 1 to 2, **characterised in that** the supporting member or supporting members (6) and/or the supporting surface(s) (7), in a top view of the machine table surface (4), is (are) arranged preferably on both sides, next to the cutting line (2).

4. A sawing machine according to Claim 3, **characterised in that** the supporting members (6) and/or the supporting surfaces (7), viewed in a top view of the machine table surface (4), are at a distance (11) of at most 100 mm, preferably at most 50 mm, from the cutting line (2).

5. A sawing machine according to one of Claims 1 to 4, **characterised in that** at least one of the supporting-member drives (8), preferably each supporting-member drive (8), has an advance member (12) with a wedge (13), and/or the supporting member (6) associated in each case has a wedge (13), the supporting member (6) being able to be moved by the advance member (12) by means of the wedge (the wedges) (13) into the advanced position on the second side (10) of the machine table surface (4) by movement, preferably linear displacement, of the advance member (12) by means of the supporting-member drive (8).

6. A sawing machine according to Claim 5, **characterised in that** at least one of the, preferably each of the, supporting members (6) and the associated advance member (12) has/have wedge faces (14) and lie(s) against one another with their wedge faces (14).

7. A sawing machine according to Claim 5 or 6, **characterised in that** the advance member (12) can be displaced linearly by the supporting-member drive (8) in a direction of advance (15), and an angle (16) between the wedge face (14) of the wedge (13) and the direction of advance (15) amounts to between 5° and 30°, preferably between 10° and 20°.

8. A sawing machine according to one of Claims 5 to 7, **characterised in that** at least one of the, preferably each of the, supporting members (6) and the associated advance member (12) are constrainedly coupled both with respect to the direction of movement (17) of the supporting surface (7) of the supporting member (6) out of the retracted position into the advanced position and also with respect to the opposite direction of movement (18) of the supporting surface (7) of the supporting member (6).

9. A sawing machine according to Claim 8, **characterised in that** the supporting member, preferably each of the supporting members (6), and the associated advance member (12) are constrainedly coupled by means of a tongue-and groove joint (19), preferably T-shaped or dovetail-shaped in cross-section, in the wedge faces (14) of the advance member (12) and supporting member (6).

10. A sawing machine according to one of Claims 5 to 9, **characterised in that** the advance member (12) can be displaced, preferably linearly, by the supporting-member drive (8) in a direction of advance (15) which is oblique or orthogonal to at least one of the directions of movement (17, 18) of the supporting member (6) or of the supporting surface (7) from the retracted position in or on the first side (9) of the machine table surface (4) into the advanced position on the second side (10) of the machine table surface (4).

11. A sawing machine according to one of Claims 1 to 10, **characterised in that** the supporting-member drive (8) is arranged within the machine table (1) and/or on the first side (9) of, preferably in the operating position of the sawing machine below, the machine table surface (4).

12. A sawing machine according to one of Claims 1 to 11, **characterised in that** at least one of the, preferably each of the, supporting members (6) can be retained or supported with its supporting surfaces (7) in at least one of the, preferably each of the, positions on the second side (10) of the machine table surface (4), preferably by the associated supporting-member drive (8).

13. A sawing machine according to one of Claims 1 to 12, **characterised in that** in the advanced position a distance (20) between the machine table surface (4) and the supporting surface (7) of at least one of the supporting members (6), preferably of each supporting member (6), of at least 5 mm, preferably of at least 10 mm, can be set.

14. A sawing machine according to one of Claims 1 to 13, **characterised in that** the supporting surface (7) of at least one of the supporting members (6), preferably of each supporting member (6), has a diameter (21) of between 20 mm and 60 mm, preferably between 35 mm and 45 mm.

## Revendications

1. Machine à scier destinée à scier au moins une pièce (1), en particulier une plaque ou une pile de plaques, comprenant un dispositif de sciage (3) pouvant se déplacer le long d'une ligne de coupe (2), en particulier rectiligne, pour le sectionnement de la pièce (1) s'appliquant sur ou contre une surface de table de machine (4) d'une table de machine (5) de la machine à scier, dans laquelle une succession de corps d'appui (6), dont les surfaces d'appui (7) destinées à soutenir la pièce (1) peuvent être déplacées par au moins un entraînement de corps d'appui (8) d'une position en retrait dans la surface de table de machine (4) ou sur une première face (9), de préférence dans la position de fonctionnement de la machine à scier au-dessous de la surface de table de machine (4) dans une position avancée sur une deuxième face (10), de préférence dans la position de fonctionnement au-dessus de la surface de machine (4), est agencée dans ou sur la table de machine (5), **caractérisée en ce que** les surfaces d'appui (7) destinées à soutenir la pièce (1) peuvent être déplacées respectivement indépendamment les unes des autres par au moins un entraînement de corps d'appui (8) d'une position en retrait dans la surface de table de machine (4) ou sur la première face (9), de préférence dans la position de fonctionnement de la machine à scier au-dessous de la surface de table de machine (4), dans une position avancée sur la deuxième face (10), de préférence dans la position de fonctionnement de la machine à scier au-dessus de la surface de table de machine (4).

2. Machine à scier selon la revendication 1, **caractérisée en ce que** les surfaces d'appui (7) des corps d'appui (6) sont plus ou moins larges et/ou peuvent être déplacées à différents moments et/ou par des entraînements de corps d'appui (8) respectivement séparés dans une position avancée sur la deuxième face (10) de la surface de table de machine.

3. Machine à scier selon l'une quelconque des revendications 1 à 2, **caractérisée en ce que** le ou les corps d'appui (6) et/ou la ou les surfaces d'appui (7) est/sont agencé(s), en vue en élévation de la surface de table de machine (4), à côté de la ligne de coupe (2), de préférence de chaque côté de celle-ci.

4. Machine à scier selon la revendication 3, **caractérisée en ce que** les corps d'appui (6) et/ou les surfaces d'appui (7), observées dans la vue en élévation de la surface de table de machine (4), présentent un écart (11) de maximum 100 mm, de préférence de maximum 50 mm, par rapport à la ligne de coupe (2).

5. Machine à scier selon l'une quelconque des revendications 1 à 4, **caractérisée en ce qu'**au moins un des entraînements de corps d'appui (8), de préférence chaque entraînement de corps d'appui (8), comprend un corps d'avance (12) pourvu d'un coin (13) et/ou le corps d'appui (6) respectivement associé comprend un coin (13), dans laquelle le corps d'appui (6) peut être déplacé par le corps d'avance (12) au moyen du coin (des coins) (13) dans la position avancée sur la deuxième face (10) de la surface de table de machine (4) à la suite d'un déplacement, de préférence d'un coulissement linéaire, du corps d'avance (12) au moyen de l'entraînement de corps d'appui (8).

6. Machine à scier selon la revendication 5, **caractérisée en ce qu'**au moins un des, de préférence chaque, corps d'appui (6) et le corps d'avance (12) associé comprennent des surfaces cunéiformes (14) et s'appliquent les uns contre les autres par leurs surfaces cunéiformes (14).

7. Machine à scier selon la revendication 5 ou 6, **caractérisée en ce que** le corps d'avance (12) peut être déplacé linéairement dans une direction d'avance (15) par l'entraînement du corps d'appui (8) et un angle (16) entre la surface cunéiforme (14) du coin (13) et la direction d'avance (15) est compris entre 5° et 30°, de préférence entre 10° et 20°.

8. Machine à scier selon l'une quelconque des revendications 5 à 7, **caractérisée en ce qu'**au moins un des, de préférence chaque, corps d'appui (6) et le corps d'avance (12) associé sont couplés de force aussi bien en ce qui concerne le sens de mouvement (17) de la surface d'appui (7) du corps d'appui (6) de la position en retrait dans la position avancée qu'en ce qui concerne le sens de mouvement (18), opposé à celui--ci, de la surface d'appui (7) du corps d'appui (6).

9. Machine à scier selon la revendication 8, **caractérisée en ce que** le, de préférence chaque, corps d'appui (6) et le corps d'avance (12) associé sont couplés de force dans les surfaces cunéiformes (14) du corps d'avance (12) et du corps d'appui (6) au moyen d'une liaison à rainures et languettes (19) de préférence en forme de T ou en forme de queue d'aronde en section transversale.

10. Machine à scier selon l'une quelconque des revendications 5 à 9, **caractérisée en ce que** le corps d'avance (12) peut être déplacé, de préférence linéairement, par l'entraînement de corps d'appui (8), dans une direction d'avance (15), laquelle est en biais ou perpendiculaire par rapport à au moins un des sens de mouvement (17, 18) du corps d'appui (6) ou des surfaces d'appui (7), de la position en retrait dans ou sur la première face (9) de la surface de table de machine (4) dans la position avancée sur la deuxième face (10) de la surface de table de machine (4).

11. Machine à scier selon l'une quelconque des revendications 1 à 10, **caractérisée en ce que** l'entraînement de corps d'appui (8) est agencé à l'intérieur de la table de machine (1) et/ou sur la première face (9), de préférence dans la position de fonctionnement de la machine à scier au-dessous de la surface de table de machine (4).

12. Machine à scier selon l'une quelconque des revendications 1 à 11, **caractérisée en ce qu'**au moins un des, de préférence chaque, corps d'appui (6), peut être retenu ou en appui, par ses surfaces d'appui (7), dans au moins une des positions, de préférence dans chaque position, sur la deuxième face (10) de la surface de table de machine (4), de préférence au moyen de l'entraînement de corps d'appui (8) associé.

13. Machine à scier selon l'une quelconque des revendications 1 à 12, **caractérisée en ce que**, dans la position avancée, un écart (20) entre la surface de table de machine (4) et la surface d'appui (7) d'au moins un des corps d'appui (6), de préférence de chaque corps d'appui (6), d'au moins 5 mm, de préférence d'au moins 10 mm, est réglable.

14. Machine à scier selon l'une quelconque des revendications 1 à 13, **caractérisée en ce que** la surface d'appui (7) d'au moins un des corps d'appui (6), de préférence de chaque corps d'appui (6), présente un diamètre (21) compris entre 20 mm et 60 mm, de préférence compris entre 35 mm et 45 mm.
